Europäisches Patentamt

European Patent Office

Office européen des brevets

(11) Publication number: **0 517 241 A2**

# EUROPEAN PATENT APPLICATION

(21) Application number: **92109537.8**

(22) Date of filing: **05.06.92**

(51) Int. Cl.⁵: **G06F 7/544**, G06F 15/347

(30) Priority: **06.06.91 US 711078**

(43) Date of publication of application:
**09.12.92 Bulletin 92/50**

(84) Designated Contracting States:
**DE FR GB IT NL**

(71) Applicant: **LSI LOGIC CORPORATION**
**1551 McCarthy Boulevard**
**Milpitas, CA 95035(US)**

(72) Inventor: **Ruetz, Peter**
**118 Grand Street**
**Redwood City, California 94062(US)**
Inventor: **Ti, Wen-Wi**
**1423 Saratoga Drive**
**Milpitas, California 95035(US)**

(74) Representative: **Kahler, Kurt, Dipl.-Ing.**
**Patentanwälte Kahler, Käck & Fiener et al**
**Maximilianstrasse 57 Postfach 12 49**
**W-8948 Mindelheim(DE)**

(54) **Interleaved multiplier accumulator.**

(57) An interleaved multiplier accumulator achieves high throughput and efficient matrix multiplication due to its pipelined multiplier and accumulator organization.

FIG.3

## TECHNICAL FIELD OF THE INVENTION

The present invention relates to multiplier-accumulators such as those used in digital signal processing and graphic systems, and particularly to applications involving matrix multiplication.

## BACKGROUND OF THE INVENTION

In modern digital signal processing and graphic systems, it is often necessary to perform a number of sum-of-products calculations, especially in applications such as real-time image processing and multi-dimensional control systems. Generally, such applications require high-speed matrix multiplications, or solution of a number of simultaneous equations. The solution of these problems often requires calculations involving terms of the form:

$$\begin{bmatrix} A_{11} & A_{12} & A_{13} & \cdots & A_{1n} \\ A_{21} & A_{22} & A_{23} & \cdots & A_{2n} \\ \cdot & \cdot & \cdot & & \cdot \\ \cdot & \cdot & \cdot & & \cdot \\ \cdot & \cdot & \cdot & & \cdot \\ A_{n1} & A_{n2} & A_{n3} & & A_{nn} \end{bmatrix} \times \begin{bmatrix} X_1 \\ X_2 \\ \cdot \\ \cdot \\ \cdot \\ X_n \end{bmatrix}$$

$A_{11}X_1 + A_{12}X_2 + A_{13}X_3 + \ldots$
$A_{21}X_1 + A_{22}X_2 + A_{23}X_3 + \ldots$

where the $A_{rc}$ terms refer to the matrix coefficient at row 'r' column 'c' of a rectangular matrix, and the $X_n$ terms are '$n^{th}$' coefficients of a vector.

Typically, these calculations are performed with the assistance of digital hardware organized as a multiplier-accumulator, or an array of multiplier-accumulators.

The multiplier-accumulator is named for its component parts: a multiplier and an accumulator. The multiplier part accepts two digital inputs and produces a digital product. The accumulator comprises two subcomponents: a digital adder and a storage element or pipeline register. Generally, an accumulator is connected such that the output of the pipeline register is connected to one of the inputs of the adder and the output of the adder is connected to the input of the storage element, such that with each successive addition the digital value in the pipeline register increases by the amount added.

Some multiplier-accumulators operate only on fixed-point (or binary integer) numbers, while others are designed to operate on floating point numbers. In either case, the circuit topology is the same. The only difference is in the specific design of the multiplier and accumulator. Both floating-point and fixed-point multipliers and accumulators are well known and widely implemented in the present art, and details of their design will not be discussed herein.

The multiplier-accumulator is uniquely suited to sum-of-products calculations. As products are calculated, they may be added to the contents of a storage register which contains the results of previous additions. The result is then stored in the storage register, and the next multiplication is performed.

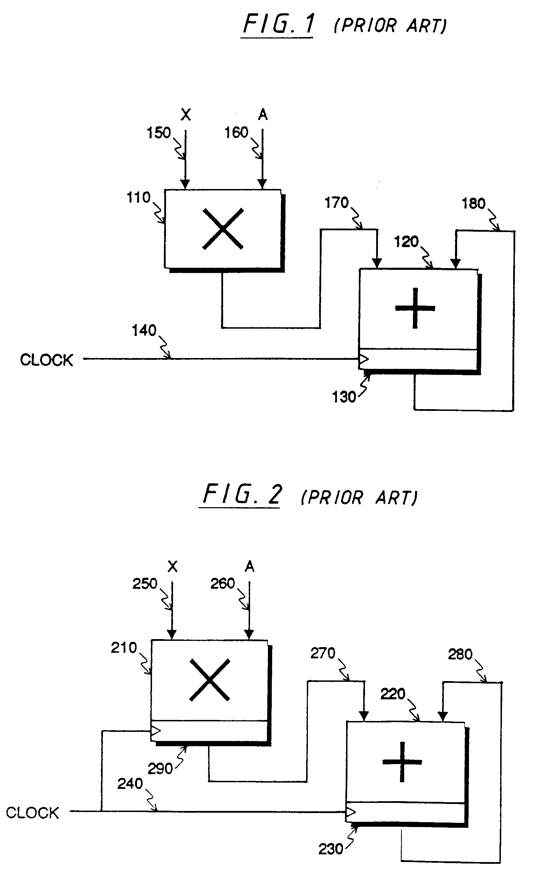

Typical multiplier-accumulator arrangements are shown in Figures 1 and 2. The following elements are set forth therein: Multiplier 110, 210; Adder 120,220; Pipeline Register 130,230,290; Clock 140, 240; Multiplier Inputs 150, 160, 250, 260; Adder Inputs 170, 180, 270, 280.

In Figure 1, a multiplier and an accumulator are connected such that two inputs "X" and "A" (corresponding to the "X" and "A" terms in the aforementioned sum-of-products) are applied to the inputs of the multiplier, and the output of the multiplier is applied to one input of the accumulator (adder 120). The output of the accumulator (adder 120) is provided to an edge-triggered pipeline register, the output of which is then connected to the other input of the accumulator (adder 120).

The multiplier-accumulator of Figure 2 is identical to that of Figure 1, with the exception that an edge-triggered pipeline register (290) is placed between the multiplier output and the accumulator input.

In the multiplier-accumulator of Figure 1, inputs 160 "$A_n$"and 150 "$X_n$" (where the subscript 'n', not shown in the drawing, refers to sample-time 'n') are operated on by a multiplier 110 to produce result "$AX_n$" on line 170. This result is then applied to one input of accumulator 120. The output of accumulator 120 is fed to a pipeline register 130. The output of register 130 is connected to another input of accumulator 120 via line 180. The next inputs "$A_{n+1}$" and "$X_{n+1}$" cannot be applied to the multiplier until result "$AX_n$" has been latched (clock 140) by the pipeline register. The minimum clock period must take into account all of the serial delays between the multiplier inputs and the register. This period is given by:

$$t_{clk} = t_{pd(mult)} + t_{pd(acc)} + t_{setup(reg)} + t_{cd(reg)} + t_{rise(clk)}$$

where:

$t_{clk}$ is the minimum clock period;

$t_{pd(mult)}$ is the propagation delay through the multiplier;

$t_{pd(acc)}$ is the propagation delay through the accumulator;

$t_{setup}(reg)$ is the input data to clock edge setup time for the pipeline register;

$t_{cd(reg)}$ is the delay time from clock to data for the pipeline register; and

$t_{rise(clk)}$ is the clock rise time.

The multiplier-accumulator of Figure 2 is almost identical to that of Figure 1, with multiplier 210, accumulator (adder part) 220, register 230, and lines 240, 250, 260, 270, and 280 corresponding to similarly numbered items in Figure 1. The major difference is the addition of a second pipeline register 290 at the output of multiplier 220. Because of the double-pipelined configuration, the minimum clock period for this configuration is given by:

$$t_{clk} = t_{pd(mult)} + t_{pd(acc)} + t_{setup(reg)} + t_{cd(reg)} + t_{rise(clk)}$$

assuming that $t_{pd(mult)}$ is greater than or equal to $t_{pd(acc)}$.

This configuration can operate much faster, given the same components as for the multiplier-accumulator of Figure 1, but imposes an additional clock cycle of delay before results are presented to the output of register 230.

Assuming that the propagation delays of the multipliers and accumulators of Figures 1 and 2 are equal and have a value of $t_{pd}$, and that the delays associated with the register and clock are negligible, then the minimum time require to multiply an n by n square matrix with an n by 1 vector is given by:

$$t_{calc} = 2n^2 t_{pd}$$

for the multiplier-accumulator of Figure 1, and

$$t_{calc} = n^2 t_{pd}$$

for the multiplier-accumulator of Figure 2.

As image-processing and graphic applications have grown, needs for higher display resolution and better user-responsiveness have arisen. This translates into an ever-increasing need for faster matrix multiplication. While many high-speed image processing systems have been designed, they are often based upon massively parallel implementations of digital hardware in order to improve speed. Evidently, such systems may become quite expensive.

Because of these applications, there is a need for a multiplier-accumulator which will provide the best possible performance at the lowest possible cost.

DISCLOSURE OF THE INVENTION

It is therefore an object of the present invention to provide a multiplier-accumulator providing better throughput than that of conventional multiplier-accumulators.

It is a further object of the present invention to provide a multiplier-accumulator capable of significantly reduced matrix multiplication time,

It is a further object of the present invention to significantly decrease the minimum clock period for a multiplier-accumulator over that of conventional multiplier-accumulators.

According to the invention, an interleaved multiplier-accumulator is constructed of a plurality of serially-connected multiplier segments and a plurality of serially-connected accumulator segments. Each multiplier segment includes a multiplier element and pipeline register. Each accumulator segment includes an adder (or other arithmetic unit) element and a pipeline register. Data, such as for matrix multiplication, is provided to the first of the serially-connected multiplier segments, and all of the pipeline registers are clocked. The output of the last of the serially-connected multiplier segments is provided to an input of the first of the serially-connected accumulator segments. The output of the last of the serially-connected accumulator segments is provided to another input of the first accumulator segment. The overall output of the multiplier accumulator is taken from the output of the last accumulator segment.

According to a feature of the invention, additional pipeline stages may be serially-connected to the outputs of the last multiplier and accumulator segments.

According to a feature of the invention, the multiplier and adder elements can be other arithmetic units, and the registers can be lumped into memory.

The interleaved multiplier-accumulator of this invention achieves high throughput and efficient matrix multiplication due to its pipelined multiplier and accumulator organization.

Other objects, features and advantages and advantages will become apparent in light of the following description thereof.

## BRIEF DESCRIPTION OF THE DRAWINGS

Figure 1 is a diagram illustrating the structure of a conventional single-pipelined multiplier-accumulator.

Figure 2 is a diagram illustrating the structure of a conventional double-pipelined multiplier-accumulator.

Figure 3 is a diagram illustrating the structure of a preferred embodiment of the multiplier-accumulator of the present invention.

Figure 4 is a diagram illustrating a preferred embodiment of the present invention specifically designed for 4 by 4 matrix multiplication.

Figure 5 is a data flow and timing diagram illustrating the flow of data through the multiplier-accumulator of the present invention for a 4 by 4 matrix-vector multiplication.

## DETAILED DESCRIPTION OF THE INVENTION

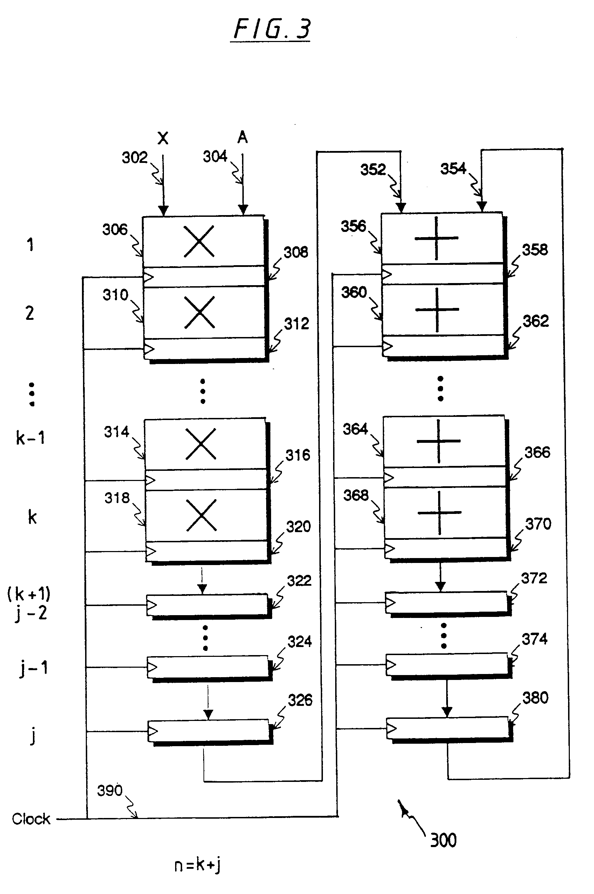

Figure 3 shows a multiplier-accumulator 300 comprising a pipelined multiplier (306-320), a pipelined adder or accumulator (356-370), and a number of additional pipeline registers (322,324,326,372,374,380). The multiplier is organized into a number ('k') of pipelined segments (multipliers 306, 310, 314, 318), each feeding into the next segment via pipeline registers (308, 312, 316, 320), and a number ('j') of additional serially connected pipeline registers (322, 324, 326), such that the total number of pipeline registers (k + j) is equal to the order ('n') of a square matrix to be multiplied by a vector of the same order ('n').

Also, according to the invention, there is a similarly configured adder chain (356-370), with a same number ('k') of pipelined adder segments (306, 310, 314, 318) each feeding into the next via pipeline registers (358, 362, 366, 370) and a same number ('j') of additional serially connected pipeline registers (372, 374, 380). The output of the final pipeline register 380 is fed back into one of the first pipelined adder segment's inputs 354. The other input 352 is connected to the output of the final pipeline register 326 of the aforementioned pipelined multiplier.

Initially, all registers are cleared (filled with zeros) either by applying a zero input to one or both of the multiplier inputs, forcing the accumulator feedback 354 to zero, and clocking (see Clock 390) the system until all of the registers are filled with zeros, or by parallel loading the registers by direct means, or by forcing the accumulator feedback signal to zero.

After initialization, input pairs to be multiplied and accumulated are applied to the multiplier-accumulator in a pairwise sequential fashion (e.g., $A_1$ and $X_1$, $A_2$ and $X_1$, etc.), one pair per cycle of clock 390. After 'k' clock cycles, the first completed product (i.e., the product of $X_1$ and $A_1$) is present at the output of pipeline register 320. Three other products are in process in the pipeline (i.e., $A_2X_2$ in register 316, $A_3X_3$ in register 312, and $A_4X_4$ in register 308), but are not as yet fully resolved. After 'j' more clocks, the first product, $A_1X_1$, is present at input 352 of the accumulator. After 'n' more clocks, all of the accumulator pipeline registers have a single product term in them (each one has been added to a zero value, however, the values are not fully resolved until the k'th register 370 has been reached). Register 358 has $A_nX_n$, register 362 has $A_{n-1}X_{n-1}$, etc., down to register 380 which has $A_1X_1$. On the next clock, the output of register 380 will be added to the next product out of the multiplier pipeline, $A_{n+1}X_{n+1}$. This process will continue such that every register in the pipeline will contain sums of products spaced 'n' clocks apart. That is, if n is 8 and register 380 has $A_1X_1 + A_9X_9$, then register 374 contains $A_2X_2 + A_{10}X_{10}$, and so on.

One specific example which is particularly useful and illustrative is the 4x4 matrix-vector multiplication of the form:

$$\begin{bmatrix} A & B & C & D \\ E & F & G & H \\ I & J & K & L \\ M & N & O & P \end{bmatrix} \times \begin{bmatrix} X \\ Y \\ Z \\ W \end{bmatrix}$$

The resulting vector has four terms:

1)   AX + BY + CZ + DW,

2)   EX + FY + GZ + HW,

3)   IX + JY + KZ + LW, and

4)   MX + NY + OZ + PW

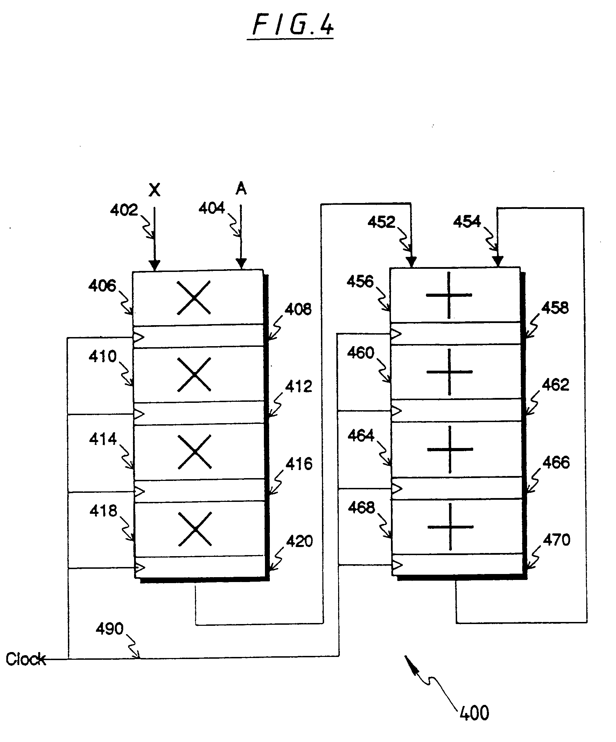

Figure 4 shows the structure of a multiplier-accumulator 400 for calculating the aforementioned 4x4 matrix-vector product. The following elements are set forth, and require no further description: Multipliers 406, 410, 414, 418; Adders 456, 460, 464, 468; Inputs to Multiplier 402, 404; Inputs to Adder 452, 454; Pipeline Registers 408, 412, 416, 420, 458, 462, 466, 470; and Clock Input 490.

If register delays are assumed to be negligible compared to multiplier and adder delays (which is a reasonable approximation), and if, as in Figure 4, the multiplier and accumulator are broken up such that each has four internal pipelined sections (register following each arithmetic unit), then it can be assumed that the minimum clock period which may be used will be roughly $t_{pd(mul)}/4$, since the multiplier delay has also been broken up into four approximately equal segments. This is approximately four times the clock speed of the multiplier-accumulator of Figure 2, and about eight times the clock speed of the multiplier-accumulator of Figure 1.

Traditional multiplier-accumulators would present inputs in the following order:
AX, BY, CZ, DW, EX, FY, GZ, HW, etc..

Because of the internal pipelining in the multiplier-accumulator of the present invention, the order of data present for processing is instead:
AX, EX, IX, MX, BY, FY, JY, NY, etc..

Because of the "interleaved" nature of the data operations in the present invention, it is referred to as an "interleaved multiplier-accumulator".

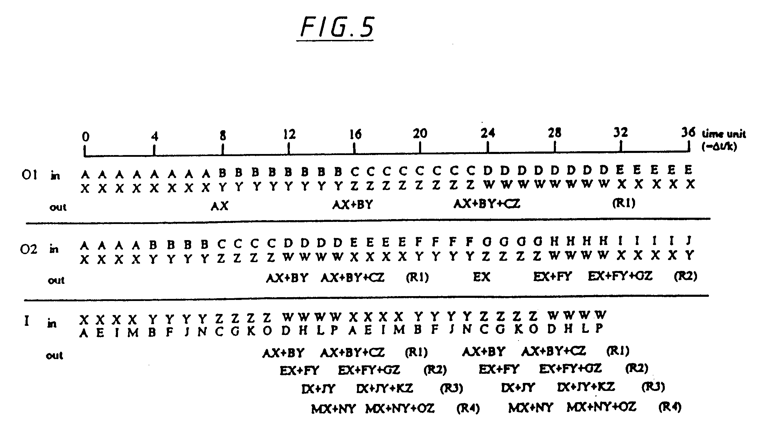

Figure 5 shows the data timing and flow for a 4x4 matrix-vector multiplication for the multiplier-accumulators of Figures 1 and 2, referred to as "01" and "02", respectively, as well as for the interleaved multiplier-accumulator, referred to as "I".

From Figure 5, it is easily verified that for the case when n = k = 4, the latencies (time for a single matrix-vector multiply) for each of the multiplier-accumulators (in time units of interleaved multiplier-accumulator clock cycles) is:

01:   t = 128 time units

02:   t = 68 time units

I:   t = 20 time units (clock cycles)

The latencies for the case where n is greater than or equal to k (again in time units of interleaved multiplier-accumulator clock cycles) is given by: (01 and 02 are shown for comparison purposes)

O1: $t = 2kn^2$

O2: $t = kn^2 + k$

I: $t = n^2 + n$

The throughput T (matrix-vector multiplications per second) of the three methods for continuous operation is:

O1: $T = 1/(2n^2 t_{clk})$

O2: $T = 1/(n^2 t_{clk})$

I: $T = k/(n^2 t_{clk})$

Thus it may be seen that the interleaved multiplier-accumulator of the present invention is 2k times faster that the multiplier-accumulator of Figure 1, and k times faster than the multiplier-accumulator of Figure 2. For the example given here of a 4x4 matrix-vector multiplication, the interleaved multiplier-accumulator is eight times faster than the multiplier-accumulator of Figure 1 and four times faster than the multiplier-accumulator of Figure 2.

It should be understood, especially in interpreting the scope of the following claims, that:

(a) the pipeline registers can be implemented in a computer storage device, such as a latch or memory;

(b) the clock signal is any periodic signal; and

(c) the multiplier and adder can be arbitrary arithmetic functions (arithmetic logic units), such as multipliers, adders, dividers, subtractors - in which case the invention would be broadly represented as interleaved units performing the functions (f) and (g).

## Claims

1. An interleaved multiplier accumulator comprising:

   two data inputs;

   a data output;

   means for receiving clock signals;

   a pipelined multiplier connected to the two data inputs and having a plurality of serially connected pipelined multiplier segments, including a first final pipeline register, and arranged such that as many multiplications may be in progress as there are pipelined segments and such that each clock signal advances each partially resolved multiplication term into the next serially connected pipelined segment, and such that the output of the first final pipeline register is taken as the data output of said pipelined multiplier;

   a pipelined accumulator having two inputs and one data output, and a plurality of serially connected pipelined accumulator segments, including a second final pipeline register, and arranged such that as many additions (accumulations) may be in progress as there are pipelined segments and such that each clock cycle advances each partially resolved addition (accumulation) term into the next serially connected pipelined segment, and such that the output of the second final pipeline register is taken as the data output of said pipelined accumulator; and

   said pipelined multiplier and pipelined accumulator interconnected such that the output of the first final pipeline register of the pipelined multiplier is connected to one of the inputs of the pipelined accumulator, and the output of the second final pipeline register of the pipelined accumulator is connected to the other input of said pipelined accumulator and is also taken as the output of the interleaved multiplier accumulator; and

   wherein the pipeline registers are connected for response to the means for receiving clock signals.

2. An interleaved multiplier accumulator according to claim 1,
   wherein the pipeline registers are implemented in a computer storage device.

3. An interleaved multiplier accumulator according to claim 1 or 2,
   wherein the number of pipelined multiplier segments is the same as the number of pipelined accumulator segments.

4. An interleaved multiplier accumulator according to any of claims 1 to 3,
   wherein the number of pipelined segments in the multiplier is greater than that required to pipeline the multiplication operation and where the remainder of the pipelined multiplier is made up of serially connected pipeline registers.

5. An interleaved multiplier accumulator according to any preceding claim,

wherein the number of pipelined segments in the accumulator is greater than that required to pipeline the accumulation operation and wherein the remainder of the pipelined accumulator is made up of serially connected pipeline registers.

6. An interleaved multiplier accumulator according to any preceding claim,
configured for matrix-vector multiplication, such the number of pipelined segments in the pipelined multiplier and the number of pipelined segments in the pipelined accumulator are each the same as the order (n) of the matrix-vector multiplication to be performed, and where the matrix terms are applied to one input of said interleaved multiplier accumulator in sequence: top to bottom, left to right; and the vector terms are applied to the other input of said interleaved multiplier accumulator in sequence in left to right order, but advanced only every "$n^{th}$" clock.

7. An interleaved multiplier accumulator according to any preceding claim,
wherein the pipelined multiplier and pipelined accumulator are arranged for binary integer multiplications and additions only.

8. An interleaved multiplier accumulator according to any of claims 1 to 6,
wherein the pipelined multiplier and pipelined accumulator are arranged for floating-point multiplications and additions.

9. An interleaved arithmetic unit comprising:
two data inputs;
a data output;
means for receiving periodic signals;
a first pipelined arithmetic unit performing a first function (f), connected to the two data inputs and having a plurality of serially connected pipelined first arithmetic segments, including a first final pipeline register, and arranged such that as many first functions may be in progress as there are pipelined segments and such that each periodic signal advances each partially resolved first function term into the next serially connected pipelined segment, and such that the output of the first final pipeline register is taken as the data output of said first pipelined arithmetic unit; and
a second pipelined arithmetic unit performing a second function (g), having two inputs and one data output, and a plurality of serially connected pipelined second arithmetic segments, including a second final pipeline register, and arranged such that as many second functions may be in progress as there are pipelined segments and such that each periodic signal advances each partially resolved second function term into the next serially connected pipelined segment, and such that the output of the second final pipeline register is taken as the data output of said second pipelined arithmetic unit;
wherein:
said pipelined first arithmetic unit and said second pipelined arithmetic unit are interconnected such that the output of the first final pipeline register is connected to one of the inputs of the second pipelined arithmetic unit;
the output of the second final pipeline register is connected to the other input of said second pipelined arithmetic unit and is also taken as the output of the interleaved arithmetic unit; and
the pipeline registers are connected for response to the means for receiving periodic signals.

10. An interleaved arithmetic unit according to claim 9, wherein the pipeline registers are implemented in a computer storage device.

## FIG.1 (PRIOR ART)

## FIG.2 (PRIOR ART)

## FIG. 3

n = k + j

# *FIG.*4

# FIG.5

EP 0 517 241 A2

```
        0       4       8       12      16      20      24      28      32      36  time unit
        |_____|_____|_____|_____|_____|_____|_____|_____|_____|   (=ΔU/k)

O1  in  A A A A A A A A B B B B B B B B C C C C C C C C D D D D D D D D E E E E E
        X X X X X X X X Y Y Y Y Y Y Y Y Z Z Z Z Z Z Z Z W W W W W W W W X X X X X
    out              AX              AX+BY              AX+BY+CZ              (R1)

O2  in  A A A A B B B B C C C C D D D D E E E E F F F F G G G G H H H H I I I I J
        X X X X Y Y Y Y Z Z Z Z W W W W X X X X Y Y Y Y Z Z Z Z W W W W X X X X Y
    out                  AX+BY  AX+BY+CZ  (R1)       EX       EX+FY   EX+FY+GZ   (R2)

I   in  X X X X Y Y Y Y Z Z Z Z W W W W X X X X Y Y Y Y Z Z Z Z W W W W
        A E I M B F J N C G K O D H L P A E I M B F J N C G K O D H L P
    out                  AX+BY  AX+BY+CZ  (R1)        AX+BY  AX+BY+CZ  (R1)
                         EX+FY  EX+FY+GZ  (R2)        EX+FY  EX+FY+GZ  (R2)
                         IX+JY  IX+JY+KZ  (R3)        IX+JY  IX+JY+KZ  (R3)
                         MX+NY  MX+NY+OZ  (R4)        MX+NY  MX+NY+OZ  (R4)
```